# EUROPÄISCHE PATENTANMELDUNG

(11) **EP 1 731 926 A2**
(43) Veröffentlichungstag der Anmeldung: **13.12.2006**
(21) Anmeldenummer: 06011042.6
(22) Anmeldetag: 30.05.2006
(51) Int. Cl.: G01V 8/10

(54) **Sensor zur Erfassung von Objekten in einem Überwachungsbereich**

(30) Priorität: 09.06.2005 DE 102005026611
(71) Anmelder: Leuze electronic GmbH + Co. KG, 73277 Owen/Teck (DE)
(72) Erfinder: Schwartz, Günther, 73235 Weilheim/Teck (DE); Norgate, Peter, 89075 Ulm (DE)
(74) Vertreter: Ruckh, Rainer Gerhard

(57) **Zusammenfassung**

Die Erfindung betrifft einen Sensor zur Erfassung von Objekten in einem Überwachungsbereich, mit in wenigstens einem Gehäuse (6) integrierten Sensorkomponenten, und mit wenigstens einem beweglichen Bedienelement (11), zu dessen Aufnahme feststehende Komponenten am Gehäuse (6) oder innerhalb des Gehäuses (6) vorgesehen sind. Wenigstens ein Hohlraum (21) ist zwischen dem Bedienelement und einer feststehenden Komponente mit einer Niederdruckspritzmasse (16) befüllt, welche nur an der feststehenden Komponente und nicht an dem Bedienelement (11) haftet.

## Beschreibung

### Bezugszeichenliste

- (1): Optischer Sensor
- (2): Sendelichtstrahlen
- (3): Sender
- (4): Empfangslichtstrahlen
- (5): Empfänger
- (5a, b): Empfangselemente
- (6): Gehäuse
- (7): Auswerteeinheit
- (8): Sendeoptik
- (9): Empfangsoptik
- (10): Austrittsfenster
- (11): Bedienelement
- (12): Wandsegment
- (13): Steg
- (14): Randsegment
- (14a): Einwölbung
- (15): Vorsprung
- (16): Niederdruckspritzmasse
- (17): Kopfteil
- (18): Wellenstück
- (18a): Einkerbung
- (19): Potentiometer
- (20): Bohrung
- (21): Hohlraum
- (22): Kanal
- (23): Rahmen
- (24): Öffnung
- (25): Schlitten
- (26): Stellschraube
- (27): Hohlraum
- (28): Durchbruch

Die Erfindung betrifft einen Sensor zur Erfassung von Objekten in einem Überwachungsbereich gemäß dem Oberbegriff des Anspruchs 1.

Derartige Sensoren können insbesondere als optische Lichttaster, Reflexionslichtschranken oder Distanzsensoren ausgebildet sein. Zur Objektdetektion weisen derartige Sensoren wenigstens eines Sendelichtstrahlen emittierenden Sender und einen Empfangslichtstrahlen empfangenden Empfänger auf, die je nach Typ des Sensors in einem oder mehreren Gehäusen integriert sind. Zur Auswertung der am Empfänger anstehenden Empfangssignale ist eine Auswerteeinheit vorgesehen, in welcher ein Objektfeststellungssignal generiert wird.

Zur Einstellung von Sensorparametern ist typischerweise in einer Wand des Gehäuses ein Bedienelement mit einer Welle, einer Spindel oder dergleichen angeordnet. Das Bedienelement kann dabei von der Außenseite des Gehäuses betätigt und gedreht werden. Durch die Drehung des Bedienelements wird beispielsweise ein Potentiometer im Innenraum des Gehäuses zur Vorgabe elektrischer Parameter des Sensors eingestellt. Das Bedienelement ist dabei in einem Wandsegment des Gehäuses gelagert. Zur Abdichtung der Nahtstellen zwischen dem Wandsegment und dem Bedienelement wird typischerweise ein O-Ring eingesetzt.

Nachteilig hierbei ist, dass das manuelle Einbringen des O-Ringes als Dichtungsmittel unerwünscht zeitaufwändig ist, wobei die hierfür erforderliche Montagezeit die Herstellkosten des Sensors in unerwünschter Weise erhöht.

Weiterhin ist nachteilig, dass trotz des Einsatzes derartiger Dichtungsmittel keine hinreichende Abdichtung der Nahtstellen erzielt wird.

Der Erfindung liegt die Aufgabe zugrunde einen Sensor der eingangs genannten Art bereitzustellen, in welchem bewegliche Bedienelemente auf einfache und kostengünstige Art integriert werden können.

Zur Lösung dieser Aufgabe sind die Merkmale des Anspruchs 1 vorgesehen. Vorteilhafte Ausführungsformen und zweckmäßige Weiterbildungen der Erfindung sind in den Unteransprüchen beschrieben.

Der erfindungsgemäße Sensor dient zur Erfassung von Objekten in einem Überwachungsbereich. Der Sensor umfasst in wenigstens einem Gehäuse integrierte Sensorkomponenten und wenigstens ein bewegliches Bedienelement, zu dessen Aufnahme feststehende Komponenten am Gehäuse oder innerhalb des Gehäuses vorgesehen sind. Ein Hohlraum ist zwischen einem Bedienelement und einer feststehenden Komponente mit einer Niederdruckspritzmasse befüllt, welche nur an der feststehenden Komponente und nicht an dem Bedienelement haftet.

Der Grundgedanke der Erfindung besteht darin, eine Niederdruckspritzmasse in Nahtstellen bildende Hohlräume zwischen feststehenden Komponenten des Sensors und beweglichen Bedienelementen einzuspritzen, wobei die Niederdruckspritzmasse generell zur Positionierung des Bedienelements, zu dessen Lagefixierung und/oder insbesondere auch zur Abdichtung der Nahtstelle zwischen feststehenden Komponenten und Bedienelementen dient.

Wesentlich ist hierbei die Materialauswahl für die Niederdruckspritzmasse und daraus abgeleitet für die feststehende Komponente und das Bedienelement. Die Materialauswahl ist dabei so getroffen, dass sich die Niederdruckspritzmasse mit der feststehenden Komponente fest verbindet, nicht aber mit dem Bedienelement.

Auf diese Weise kann mit der Niederdruckspritzmasse durch Anspitzen an die feststehende Komponente eine in der Form variabel und frei gestaltbare stationäre, fest stehende Aufnahme gebildet werden, in welcher oder relativ zu derer das Bedienelement in der gewünschten Bewegungsart bewegt werden kann.

Das Einspritzen der Niederdruckspritzmasse ist kostengünstig durchführbar. Dabei ist insbesondere vorteilhaft, dass das Einbringen der Niederdruckspritzmasse keine zusätzlichen Montagezeiten erfordert, wie dies beim Einbringen und Montieren von zusätzlichen mechanischen Teilen wie O-Ringen zur Ankopplung von Bedienelementen an feststehende Komponenten der Fall wäre.

Ein wesentlicher Vorteil der Erfindung besteht darin, dass durch Einspritzen von Niederdruckspritzmasse die Nahtstellen zwischen einem beweglichen Bedienelement und einer feststehenden Komponente vollständig und dicht ausgefüllt werden können, ohne dass dadurch die Beweglichkeit des Bedienelements beeinträchtigt würde. Durch Einsatz der Niederdruckspritzmasse kann somit die Formgebung einer Aufnahme optimal an das aufzunehmende Bedienelement angepasst werden.

Dabei bildet die Niederdruckspritzmasse zugleich eine sehr gute Abdichtung der Nahtstelle zwischen Bedienelement und feststehende Komponente, die ein Einbringen von Schmutz und Feuchtigkeit über die Nahtstelle effektiv unterbindet.

In einer vorteilhaften Ausführungsform sind daher insbesondere in Wänden der Gehäuse von Sensoren gelagerte Bedienelemente mit derartigen Niederdruckspritzmassen umspritzt. Die Niederdruckspritzmasse bildet dabei eine Dichtung, die insbesondere Dichtigkeiten nach Schutzarten IP67 und IP69 erreicht.

Ein weiterer Vorteil der Erfindung besteht darin, dass durch geeignete Formgestaltungen der feststehenden Komponente oder des Bedienelements durch das Einspritzen der Niederdruckspritzmasse neben einer Dichtwirkung zugleich auch eine Lagefixierung des Bedienelements erzielt wird. Durch diese Mehrfachfunktion der Niederdruckspritzmasse können die Teilerzahl des Sensors sowie die Montagezeiten zu dessen Herstellung erheblich reduziert werden.

Die Niederdruckspritzmasse kann generell zur Lagerung, Positionierung und Lagefixierung von Bedienelementen eines Sensors dienen, wobei die Bedienelemente auch im Innenraum des Sensors, beispielsweise zur Justage von Sensorkomponenten dienen können.

Die Niederdruckspritzmasse besteht bevorzugt aus einem Heiß-Klebstoff. Die spezifische Auswahl der Niederdruckspritzmasse ist an die Materialien der feststehenden Komponente und der Bedienelemente angepasst, so dass gewährleistet ist, dass die Niederdruckspritzmasse jeweils nur an der feststehenden Komponente, nicht aber an dem Bedienelement haftet.

Die Sensoren sind bevorzugt von optischen Sensoren gebildet. Generell können die Sensoren jedoch auch als induktive, kapazitive Sensoren oder Ultraschallsensoren ausgebildet sein.

Die Erfindung wird im Nachstehenden anhand der Zeichnungen erläutert. Es zeigen:
- Figur 1:: Schematische Darstellung eines optischen Sensors.
- Figur 2:: Erstes Ausführungsbeispiel eines Bedienelements für den Sensor gemäß Figur 1.
- Figur 3:: Zweites Ausführungsbeispiel eines Bedienelements für den Sensor gemäß Figur 1.
- Figur 4:: Drittes Ausführungsbeispiel eines Bedienelements für den Sensor gemäß Figur 1.

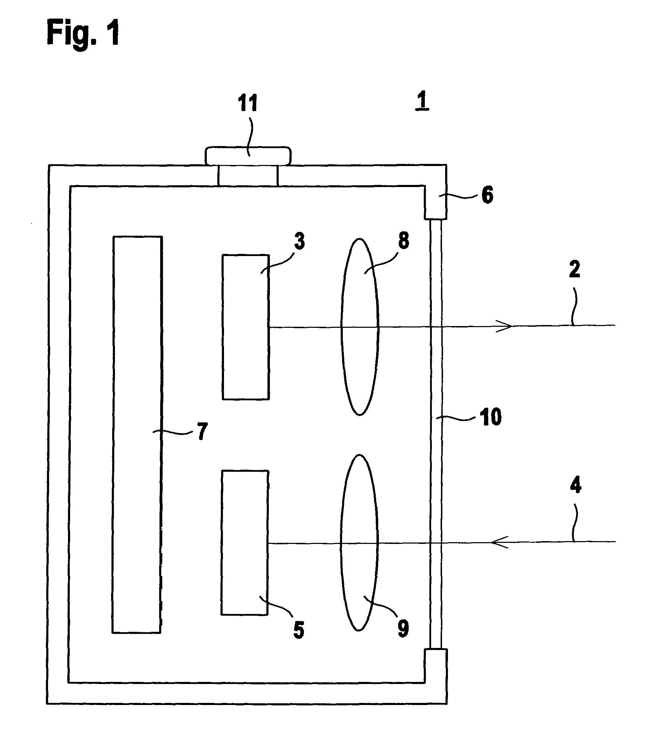

Figur 1 zeigt schematisch den Aufbau eines als Lichttaster ausgebildeten optischen Sensors 1 zur Erfassung von nicht dargestellten Objekten in einem Überwachungsbereich. Der optische Sensor 1 weist einen Sendelichtstrahlen 2 emittierenden Sender 3 und einen Empfangslichtstrahlen 4 empfangenden Empfänger 5 auf, welche in einem Gehäuse 6 integriert sind. Der Sender 3 ist von einer Leuchtdiode oder dergleichen gebildet, der Empfänger 5 besteht beispielsweise aus einer Photodiode.

Der Sender 3 und der Empfänger 5 sind an eine gemeinsame Auswerteeinheit 7 angeschlossen, die von einem Mikroprozessor oder dergleichen gebildet ist. Die Auswerteeinheit 7 dient zur Ansteuerung des Senders 3 und zur Auswertung der am Empfänger 5 anstehenden Empfangssignale.

Dem Sender 3 ist eine Sendeoptik 8 zur Strahlformung der Sendelichtstrahlen 2 nachgeordnet, dem Empfänger 5 ist eine Empfangsoptik 9 nachgeordnet, mittels derer die Empfangslichtstrahlen 4 auf den Empfänger 5 fokussiert werden.

Die Sendelichtstrahlen 2 werden durch ein Austrittsfenster 10 in der Frontwand des Gehäuses 6 in den Überwachungsbereich geführt. Befindet sich ein Objekt im Überwachungsbereich, werden die Sendelichtstrahlen 2 an diesem reflektiert und als Empfangslichtstrahlen 4 über das Austrittsfenster 10 zum Empfänger 5 geführt.

In der Auswerteeinheit 7 und durch eine Schwellwertbewertung der Empfangssignale wird ein binäres Objektfeststellungssignal generiert, dessen Schaltzustände angeben, ob sich ein Objekt im Überwachungsbereich befindet oder nicht. Das Objektfeststellungssignal wird über einen nicht dargestellten Schaltausgang ausgegeben.

An der Oberseite des Gehäuses 6 ist ein Bedienelement 11 in einer der Gehäusewand drehbar gelagert. Das Bedienelement 11 kann von einer Bedienperson betätigt werden. Durch Betätigen des Bedienelements 11 können beispielsweise optische oder elektrische Parameter des optischen Sensors 1 eingestellt werden. Beispielsweise kann durch Betätigen des Bedienelements 11 die Empfindlichkeit des optischen Sensors 1 eingestellt werden. Prinzipiell können durch Betätigen des Bedienelements 11 auch optische Parameter eingestellt werden, in dem optische Komponenten wie die Sende- 8 oder Empfangsoptik 9 oder auch der Sender 3 oder der Empfänger 5 verschoben werden.

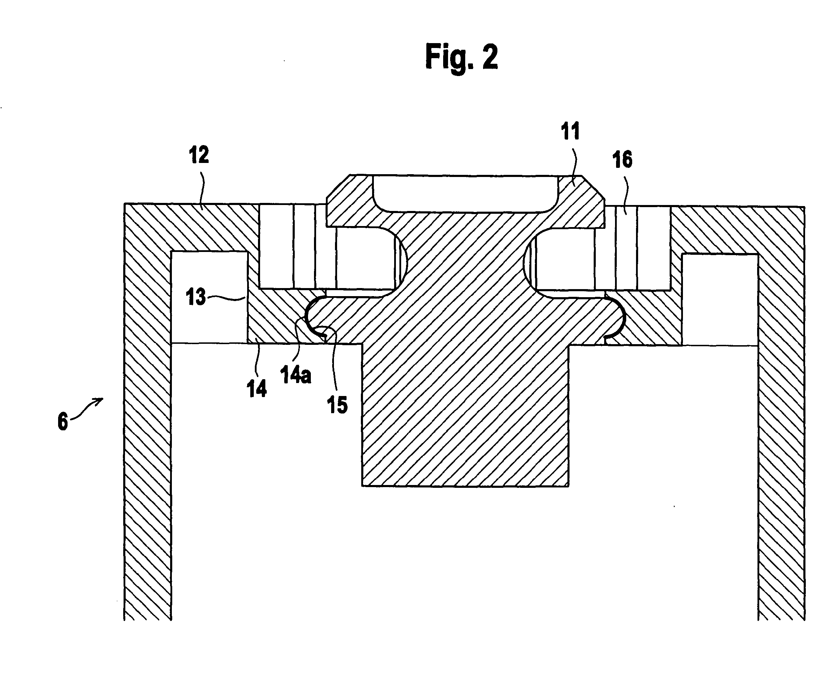

Figur 2 zeigt ein erstes Ausführungsbeispiel des Bedienelements 11 des optischen Sensors 1 gemäß Figur 1 und dessen Lagerung in einem Wandsegment 12 des Gehäuses 6.

Das Gehäuse 6 besteht im vorliegenden Fall aus einem Kunststoff-Spritzteil. Das Wandsegment 12 weist eine Öffnung auf, die durch ein über einen Steg 13 federnd mit diesem verbundenes Randsegment 14 begrenzt ist. Dieses Randsegment 14 bildet eine feststehende Komponente zur Aufnahme des Kopfteils des Bedienelements 11, welches in Figur 1 dargestellt ist.

Das Randsegment 14 ist ringförmig ausgebildet und weist an einem vorderen Rand eine Einwölbung 14a auf. In diese Einwölbung 14a wird das Bedienelement 11 mit einem kreisscheibenförmigen Vorsprung 15 eingerastet, wodurch das Bedienelement 11 drehbar in der feststehenden Komponente liegt.

Diese Ankopplung des Bedienelements 11 an die feststehende Komponente erlaubt zwar ein Drehen des Bedienelements 11 in der feststehenden Komponente, jedoch ist diese Ankopplung mit einem Spiel zwischen dem Randsegment 14 und dem Bedienelement 11 behaftet und weist demzufolge nicht die notwendige Dichtigkeit auf, die ein Eindringen von Schmutz oder Wasser in das Innere des Gehäuses 6 verhindern könnte.

Wie aus Figur 2 ersichtlich begrenzen das Randsegment 14 mit dem anschließenden Steg 13 und Wandsegment 12 sowie das im Randsegment 14 drehbar gelagerte Bedienelement 11 einen Hohlraum. In diesen Hohlraum wird eine Niederdruckspritzmasse 16 eingespritzt. Deren Materialbeschaffenheit ist so gewählt, dass die eingespritzte Niederdruckspritzmasse 16 fest an den Elementen der Gehäusewand, nämlich dem Wandsegment 12, dem Steg 13 und dem Randsegment 14 haftet, nicht jedoch an dem Bedienelement 11.

Durch das Einspritzen der Niederdruckspritzmasse 16 in den Hohlraum 21 ist dieser vollständig ausgefüllt. Da die Niederdruckspritzmasse 16 nicht an dem Bedienelement 11 haftet, kann dieses ungehindert relativ zu den Elementen der Gehäusewand mit der dann haftenden Niederdruckspritzmasse 16 gedreht und damit betätigt werden. Dabei wird die Nahtstelle zwischen den Elementen des Gehäuses 6 und dem Bedienelement 11 vollständig und lückenlos abgedichtet. Somit wird allein durch die eingespritzte Niederdruckspritzmasse 16 und ohne Einsatz zusätzlicher mechanischer Komponenten eine Abdichtung der Nahtstellen zwischen Bedienelement 11 und Gehäuse 6 erreicht.

Die Niederdruckspritzmasse 16 besteht generell aus einem Heißkleber. Beispielsweise kann die Niederdruckspritzmasse 16 zumindest teilweise aus Polyamid bestehen. Geeignete Gehäusematerialien sind in diesem Fall Kunststoffe auf Polyamidbasis wie zum Beispiel Macrolon, da sich diese mit der Niederdruckspritzmasse 16 fest verbinden. Das Bedienelement 11 besteht in diesem Fall bevorzugt aus Teflon, PMMA oder einem Metall, da sich diese Materialien nicht mit der Niederdruckspritzmasse 16 verbinden.

In einer alternativen Ausgestaltung kann die Niederdruckspritzmasse 16 zumindest teilweise aus Polyolefinen bestehen. In diesem Fall bestehen die Gehäuseteile und damit die feststehende Komponente zur Lagerung des Bedienelements 11 aus Polyamid oder PMMA. Das Bedienelement 11 kann in diesem Fall aus Polypropylen oder Polyethylen bestehen.

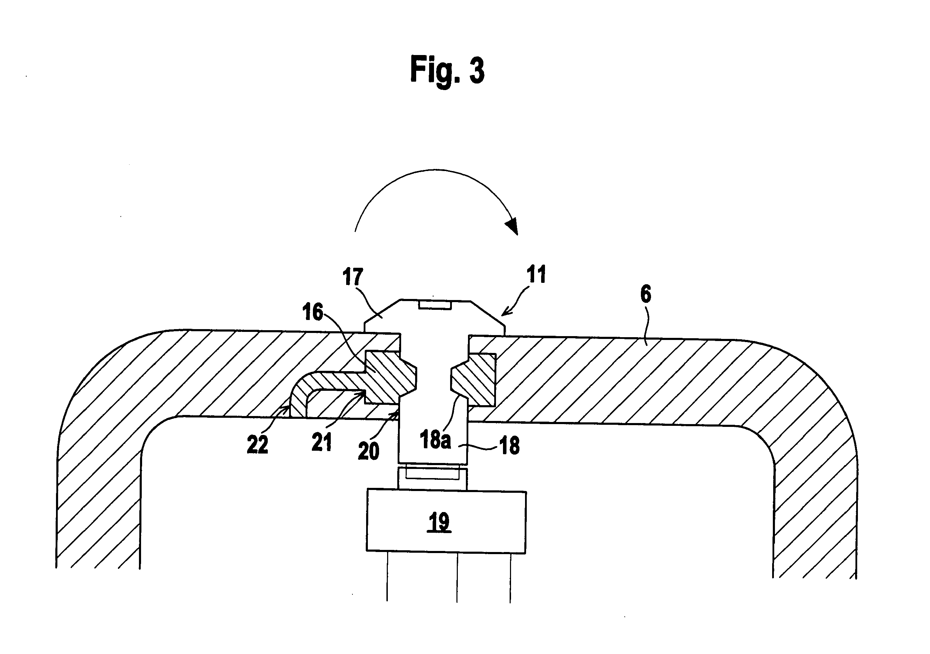

Figur 3 zeigt ein zweites Ausführungsbeispiel zur Lagerung eines Bedienelements 11 in dem Gehäuse 6 des optischen Sensors 1 gemäß Figur 1.

Das Bedienelement 11 weist in diesem Fall ein Kopfteil 17 auf, das auf der Außenseite der Gehäusewand des Gehäuses 6 des optischen Sensors 1 aufliegt. Das Bedienelement 11 weist ein an das Kopfteil 17 anschließendes Wellenstück 18 auf, das auf ein Potentiometer 19 geführt ist, mittels dessen durch Betätigen des Bedienelements 11 die Empfindlichkeit des optischen Sensors 1 eingestellt werden kann.

Als feststehende Komponente zur Aufnahme des Bedienelements 11 ist in diesem Fall eine Bohrung 20 vorgesehen, welche diese Gehäusewand durchsetzt. An die Bohrung 20 schließt ein Hohlraum 21 an, an welchen ein Kanal 22 anschließt der an der Innenseite der Gehäusewand ausmündet. Das Wellenstück des Bedienelements 11 weist eine ringförmige Einkerbung 18a auf, die an den Hohlraum 21 anschließt.

Über den Kanal 22 wird Niederdruckspritzmasse 16 in den Hohlraum 21 eingespritzt. Dabei füllt die Niederdruckspritzmasse 16 den Hohlraum 21 und die Einkerbung 18a im Wellenstück 18 vollständig aus. Die verfestigte Niederdruckspritzmasse 16 im Hohlraum 21 bildet somit einen Keil der in die Einkerbung 18a ragt und damit für eine Lagefixierung des Bedienelements 11 sorgt, das heißt das Bedienelement 11 gegen Bewegungen in axialer Richtung sichert.

Da sich die Niederdruckspritzmasse 16 wiederum nur mit der Gehäusewand fest verbindet, nicht jedoch mit dem Bedienelement 11, kann das Bedienelement 11 in der durch die Niederdruckspritzmasse 16 gebildeten Lagerung gedreht werden, wodurch die Einstellung des Potentiometers 19 erfolgen kann. Dabei bildet die Niederdruckspritzmasse 16 wiederum eine Dichtung, die den Zwischenraum zwischen Gehäuse 6 und Bedienelement 11 vollständig abdichtet.

Die Materialien des Gehäuses 6 als feststehende Komponente, des Bedienelements 11 und der Niederdruckspritzmasse 16 entsprechen der Ausführungsform gemäß Figur 2.

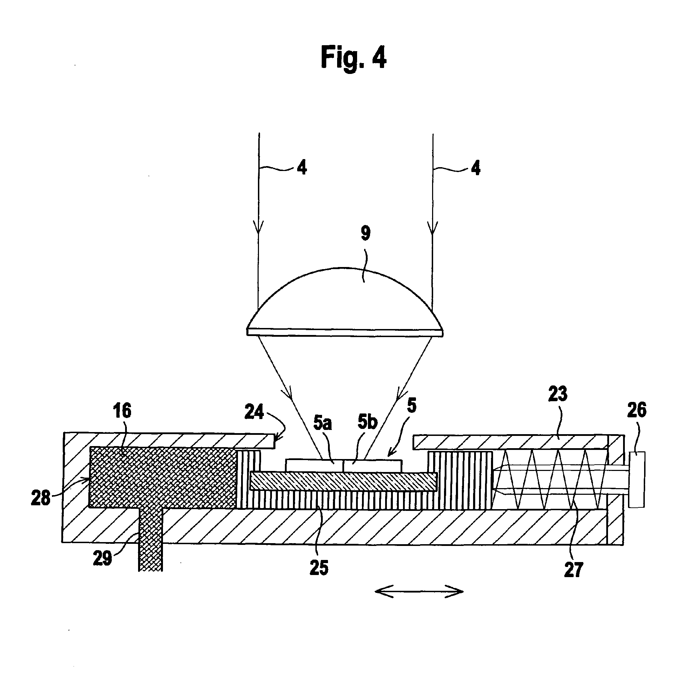

Figur 4 zeigt ein weiteres Ausführungsbeispiel eines Bedienelements 11 für einen optischen Sensor 1, wobei das Bedienelement 11 im vorliegenden Fall im Innenraum des Gehäuses 6 des optischen Sensors 1 angeordnet ist.

Wie aus Figur 4 ersichtlich besteht der der Empfangsoptik 9 zugeordnete Empfänger 5 des optischen Sensors 1 aus zwei neben einander liegenden Empfangselementen 5a, 5b. Zur Einstellung der Tastweite, das heißt der maximalen Distanz innerhalb derer Objekte im Überwachungsbereich erfasst werden können, kann der Empfänger 5 senkrecht zur Strahlachse der einfallenden Empfangslichtstrahlen 4 versetzt werden, wodurch die Anteile der Empfangslichtstrahlen 4**,** die auf die beiden Empfangselemente 5a, 5b auftreffen, einstellbar sind. Die Verschieberichtung der Empfangselemente 5a, 5b ist in Figur 4 durch einen Doppelpfeil gekennzeichnet.

Der Empfänger 5 ist in einem Rahmen 23 angeordnet, welcher an seiner der Empfangsoptik 9 zugewandten Oberseite eine Öffnung 24 aufweist, in welcher die Empfangselemente 5a, 5b freiliegen, so dass die Empfangslichtstrahlen 4 über die Empfangsoptik 9 zum Empfänger 5 geführt werden.

Die Empfangselemente 5a, 5b sind auf einer von einem Schlitten 25 gebildeten Aufnahme gelagert, der Bestandteil des Bedienelements 11 ist. Als weiterer Bestandteil des Bedienelements 11 ist eine Stellschraube 26 vorgesehen, die seitlich am Rahmen 23 ausmündet und gegen die Federkraft einer Feder 27 betätigt werden kann. Das vordere Ende der Stellschraube 26 liegt seitlich am Schlitten 25 an. Durch Betätigen der Stellschraube 26 kann der Schlitten 25 mit dem Empfänger 5 in Längsrichtung des Rahmens 23 verschoben werden.

An die gegenüberliegende Seite des Schlittens 25 schließt ein Hohlraum 28 an, der durch die Seitenwand des Schlittens 25 und durch Wandsegmente 12 des Rahmens 23 begrenzt ist. Im Bereich des Hohlraums 28 mündet ein Durchbruch 29 aus, über welchen der Hohlraum 28 mit Niederdruckspritzmasse 16 befüllt werden kann.

Vor Befüllung des Hohlraums 28 wird die Stellschraube 26 bis zu einer Grenzposition in den Rahmen 23 eingeführt, so dass der Schlitten 25 in einer entsprechenden Grenzposition liegt. Dann wird die Niederdruckspritzmasse 16 in den Hohlraum 28 eingespritzt. Die Materialien der Niederdruckspritzmasse 16 des Rahmens 23 und des Schlittens 25 sind so gewählt, dass sich die Niederdruckspritzmasse 16 nur mit dem Rahmen 23 nicht jedoch mit dem Schlitten 25 verbindet. Damit bildet die Niederdruckspritzmasse 16 einen definierten Anschlag für den Schlitten 25. Bei an der Niederdruckspritzmasse 16 anliegenden Schlitten 25 befindet sich dieser in seiner definierten Grenzposition. Von dieser Grenzposition ausgehend kann der Schlitten 25 dann nur noch nach rechts bewegt werden, das heißt von der Niederdruckspritzmasse 16 entfernt werden. Mit dem Einbringen der Niederdruckspritzmasse 16 wird somit eine Justage des Empfängers 5 in einer vorgegebenen Grenzposition ermöglicht.

## Patentansprüche

1. Sensor zur Erfassung von Objekten in einem Überwachungsbereich, mit in wenigstens einem Gehäuse integrierten Sensorkomponenten, und mit wenigstens einem beweglichen Bedienelement, zu dessen Aufnahme feststehende Komponenten am Gehäuse oder innerhalb des Gehäuses vorgesehen sind, **dadurch gekennzeichnet, dass** wenigstens ein Hohlraum (21) zwischen dem Bedienelement (11) und einer feststehende Komponente mit einer Niederdruckspritzmasse (16) befüllt ist, welche nur an der feststehenden Komponente und nicht an dem Bedienelement (11) haftet.

2. Sensor nach Anspruch 1, **dadurch gekennzeichnet, dass** die Niederdruckspritzmasse (16) ein Heiß-Klebstoff ist.

3. Sensor nach einem der Ansprüche 1 oder 2, **dadurch gekennzeichnet, dass** die Niederdruckspritzmasse (16) zumindest teilweise aus Polyamid besteht.

4. Sensor nach Anspruch 3, **dadurch gekennzeichnet, dass** die feststehende Komponente aus einem Kunststoff auf Polyamid-Basis besteht.

5. Sensor nach Anspruch 4, **dadurch gekennzeichnet, dass** die feststehende Komponente aus Macrolon besteht.

6. Sensor nach einem der Ansprüche 3 bis 5, **dadurch gekennzeichnet, dass** das Bedienelement (11) aus Teflon, PMMA oder aus einem Metall besteht.

7. Sensor nach einem der Ansprüche 1 oder 2, **dadurch gekennzeichnet, dass** die Niederdruckspritzmasse (16) zumindest teilweise aus Polyolefimen besteht.

8. Sensor nach Anspruch 7, **dadurch gekennzeichnet, dass** die feststehende Komponente aus Polyamid oder PMMA besteht.

9. Sensor nach einem der Ansprüche 7 oder 8, **dadurch gekennzeichnet, dass** das Bedienelement (11) aus Polypropylen oder Polyethylen besteht.

10. Sensor nach einem der Ansprüche 1 bis 9, **dadurch gekennzeichnet, dass** die feststehende Komponente Bestandteil einer Wand des Gehäuses (6) ist.

11. Sensor nach Anspruch 10, **dadurch gekennzeichnet, dass** das Bedienelement (11) ein an der Außenseite des Gehäuses (6) betätigbares Einstellelement bildet.

12. Sensor nach Anspruch 11, **dadurch gekennzeichnet, dass** mit dem Bedienelement Sensorparameter einstellbar sind.

13. Sensor nach Anspruch 10 bis 12, **dadurch gekennzeichnet, dass** das Bedienelement (11) eine Achse, eine Welle oder eine Spindel aufweist.

14. Sensor nach einem der Ansprüche 10 bis 13, **dadurch gekennzeichnet, dass** mittels der Niederdruckspritzmasse (16) die Nahtstellen zwischen dem Bedienelement (11) und der feststehende Komponente abgedichtet sind.

15. Sensor nach einem der Ansprüche 1 bis 14, **dadurch gekennzeichnet, dass** die Niederdruckspritzmasse (16) zur Lagefixierung des Bedienelement (11) an der feststehende Komponente dient.

16. Sensor nach einem der Ansprüche 1 bis 9, **dadurch gekennzeichnet, dass** das Bedienelement (11) im Innenraum des Gehäuses (6) zur Positionierung von Sensorkomponenten angeordnet ist.

17. Sensor nach Anspruch 16, **dadurch gekennzeichnet, dass** das Bedienelement (11) eine Aufnahme für Sensorkomponenten aufweist.

18. Sensor nach einem der Ansprüche 17 oder 18, **dadurch gekennzeichnet, dass** die Niederdruckspritzmasse (16) einen Anschlag für das Bedienelement (11) bildet.

19. Sensor nach einem der Ansprüche 1 bis 18, **dadurch gekennzeichnet, dass** dieser einen optischen Sensor (1) bildet.
